# EUROPÄISCHE PATENTSCHRIFT

(11) **EP 3 243 374 B1**
(45) Veröffentlichungstag und Bekanntmachung des Hinweises auf die Patenterteilung: **04.03.2020**
(21) Anmeldenummer: 17169763.4
(22) Anmeldetag: 05.05.2017
(51) Int. Cl.: A01D 90/12, A01D 43/08

(54) **VERFAHREN UND STEUERUNGSEINRICHTUNG ZUM BETREIBEN EINES LANDWIRTSCHAFTLICHEN TRANSPORTWAGENS SOWIE TRANSPORTWAGEN**
METHOD AND CONTROL DEVICE FOR OPERATING AN AGRICULTURAL TRANSPORT VEHICLE AND TRANSPORT VEHICLE
PROCÉDÉ ET DISPOSITIF DE COMMANDE DESTINÉS AU FONCTIONNEMENT D'UN CHARIOT DE TRANSPORT AGRICOLE ET CHARIOT DE TRANSPORT

(30) Priorität: 13.05.2016 DE 102016108902
(43) Veröffentlichungstag der Anmeldung: 15.11.2017
(73) Patentinhaber: CLAAS Saulgau GmbH, 88348 Bad Saulgau (DE)
(72) Erfinder: FRANK, Kornelius, 71287 Weissach (DE); FUGUNT, Michael, 88410 Bad Wurzach (DE)

(56) Entgegenhaltungen:
- EP-A1- 0 666 018
- EP-A1- 3 095 315
- EP-A2- 0 893 052
- EP-A2- 2 275 287
- DE-A1- 19 647 522
- US-A1- 2011 061 762

## Beschreibung

Die Erfindung betrifft ein Verfahren zum Betreiben eines landwirtschaftlichen Transportwagens nach dem Oberbegriff des Anspruchs 1. Des Weiteren betrifft die Erfindung eine Steuerungseinrichtung zum Betreiben eines landwirtschaftlichen Transportwagens und einen landwirtschaftlichen Transportwagen.

Aus der DE 10 2004 011 789 A1 ist es bekannt, einen landwirtschaftlichen Transportwagen ausgehend von einem Erntefahrzeug zu beladen. Dabei wird eine Sensiervorrichtung vorgeschlagen, mit Hilfe derer der Abstand des Transportwagens zum Erntefahrzeug erfasst werden kann, um die Beladung des Transportwagens ausgehend vom Erntefahrzeug effektiver zu gestalten.

Für einen Abtransport des Ernteguts mit Hilfe des Transportwagens ist es von Bedeutung, dass die maximal zulässige Beladung des Transportwagens eingehalten wird. Bislang sind keine Hilfsmittel bekannt, die es einfach und zuverlässig erlauben, insbesondere für den Fahrer des Erntefahrzeugs das Erreichen einer maximal zulässigen Beladung des Transportwagens anzuzeigen, zumal während des Beladevorgangs des Transportwagens ausgehend vom Erntefahrzeug die volle Aufmerksamkeit des Fahrers des Erntefahrzeugs auf den Erntevorgang und damit Beladevorgang gerichtet ist.

Es besteht daher Bedarf an einem Verfahren zum Betreiben eines landwirtschaftlichen Transportwagens, an einer Steuerungseinrichtung zur Durchführung des Verfahrens und an einem Transportwagen, mit Hilfe deren der Beladevorgang verbessert werden kann.

EP 3 095 315 A1, ein Dokument gemäß Art. 54(3) EPÜ, offenbart ein Verfahren zum Betreiben eines landwirtschaftlichen Wagens, wobei während eines Beladevorgangs des Wagens ein Laderaum des Wagens mit Erntegut beladen wird, und während des Beladevorgangs eine Masse des im Laderaum des Wagens aufgenommenen Ernteguts und eine Verteilung des Ernteguts im Laderaum, d.h. eine Ist-Beladeverteilung, ermittelt werden, und dass abhängig hiervon die weitere Beladung des Ladewagens durchgeführt wird, wobei an einer Seitenwand des Wagens eine Anzeige angeordnet sein kann, welche z. B die Ist-Beladeverteilung visualisiert oder angibt, wohin das Erntegut aktuell einzufüllen ist.

Aus US2011/0061762 A1 ist ein Füllgradanzeiger zum Messen und Anzeigen eines Restfüllpotentials eines Zielbereichs, wie z.B. eines Behälters, bekannt, der durch einen Auswurfkrümmer einer landwirtschaftlichen Erntemaschine, befüllt wird und ein 3D-Sensor zur Beobachtung mindestens eines Teils des Zielbereichs, einschließlich mindestens eines Teils des Ziels, ein Datenkontrollsystem und eine visuelle Anzeigeeinheit vorgesehen sind, wobei auf der Anzeigeeinheit eine visuelle Anzeige des Restfüllpotenzials durch Anzeige des aktuellen von mindestens drei verschiedenen Füllstandsniveaus zur Verfügung steht.

Hiervon ausgehend liegt der vorliegenden Erfindung die Aufgabe zugrunde, ein neuartiges Verfahren zum Betreiben eines landwirtschaftlichen Transportwagens und einen Transportwagen zu schaffen.

Diese Aufgabe wird durch ein Verfahren zum Betreiben eines landwirtschaftlichen Transportwagens nach Anspruch 1 gelöst.

Erfindungsgemäß wird abhängig von der ermittelten Masse des im Laderaum des Transportwagens aufgenommenen Ernteguts mindestens eine Signaleinrichtung des Transportwagens automatisch angesteuert, um zumindest einem Fahrer des Erntefahrzeugs das Ende des Beladevorgangs zu signalisieren.

Mit der hier vorliegenden Erfindung wird erstmals vorgeschlagen, abhängig von einer während des Beladevorgangs im Laderaum des Transportwagens aufgenommenen Masse des Ernteguts mindestens eine Signaleinrichtung des Transportwagens anzusteuern und hierdurch zumindest dem Fahrer des Erntefahrzeugs das Ende des Beladevorgangs zu signalisieren. Hiermit kann eine Überladung des Transportwagens mit Erntegut einfach und zuverlässig verhindert werden. Insbesondere der Fahrer des Erntefahrzeugs wird hierdurch erheblich entlastet. Die Erfindung stellt jedoch auch eine Entlastung für den Fahrer des Transportwagens bereit.

Vorzugsweise wird zumindest eine Signaleinrichtung des Transportwagens angesteuert, um zumindest dem Fahrer des Erntefahrzeugs das Ende des Beladevorgangs zu signalisieren. Besonders bevorzugt ist es, wenn zur Signalisierung des Endes des Beladevorgangs für den Fahrer des Erntefahrzeugs eine ohnehin vorhandene Signaleinrichtung des Transportwagens angesteuert wird. Beim Erntevorgang ist der Blick des Fahrers des Erntefahrzeugs ohnehin größtenteils auf den Transportwagen gerichtet, sodass dann eine Signaleinrichtung des Transportwagens besonders vorteilhaft eingesetzt werden kann, um dem Fahrer des Erntefahrzeugs über das Ende des Beladevorgangs zu informieren.

Nach einer vorteilhaften Weiterbildung wird die ermittelte Masse des im Laderaum aufgenommenen Ernteguts automatisch mit einem von einer maximalen zulässigen Beladung abhängigen Grenzwert verglichen, wobei dann, wenn die ermittelte Masse des im Laderaum aufgenommenen Ernteguts diesen Grenzwert erreicht oder überschreitet, die jeweilige Signaleinrichtung angesteuert wird, um zumindest dem Fahrer des Erntefahrzeugs das Ende des Beladevorgangs zu signalisieren.

Alternativ wird abhängig von der ermittelten Masse des im Laderaum aufgenommenen Ernteguts automatisch eine Gesamtmasse des Transportwagens oder eine Gesamtmasse des Transportwagens einschließlich des Zugfahrzeugs ermittelt und mit einem von einer maximalen zulässigen Gesamtmasse abhängigen Grenzwert verglichen, wobei dann, wenn die ermittelte Gesamtmasse diesen Grenzwert erreicht oder überschreitet, die jeweilige Signaleinrichtung des Transportwagens und/oder des Zugfahrzeugs angesteuert wird, um zumindest dem Fahrer des Erntefahrzeugs das Ende des Beladevorgangs zu signalisieren.

Vorzugsweise wird der von der maximalen zulässigen Beladung abhängige Grenzwert oder der von der maximalen zulässigen Gesamtmasse abhängige Grenzwert derart gewählt, dass zumindest dem Fahrer des Erntefahrzeugs das Ende des Beladevorgangs vor Erreichen der maximalen zulässigen Beladung oder vor Erreichen der maximalen zulässigen Gesamtmasse signalisiert wird. Diese Ausprägung der Erfindung ist besonders bevorzugt. Dann, wenn der Grenzwert, bei dessen Erreichen oder Überschreiten dem Fahrer des Erntefahrzeugs das Ende des Beladevorgangs signalisiert wird, geringer als die maximal zulässige Belademasse oder geringer als die maximal zulässige Gesamtmasse ist, steht noch eine Sicherheitsreserve zur Verfügung, um zum Beispiel die aktuell befahrende Spur im Feld noch fertig zu ernten und erst im Anschluss den Transportwagen auszutauschen.

Vorzugsweise ist die maximal zulässige Beladung oder die maximal zulässige Gesamtmasse einstellbar. Hiermit kann besonders einfach eine Anpassung an die aktuell gültigen Randbedingungen vorgenommen werden.

Der landwirtschaftliche Transportwagen ist in Anspruch 11 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Draufsicht auf ein landwirtschaftliches Zuggespann aus einem landwirtschaftlichen Transportwagen und einem landwirtschaftlichen Zugfahrzeug zusammen mit einem Erntefahrzeug, welches den landwirtschaftlichen Transportwagen belädt;
- Fig. 2: eine Seitenansicht des landwirtschaftlichen Zuggespanns aus dem landwirtschaftlichen Transportwagen und dem landwirtschaftlichen Zugfahrzeug.

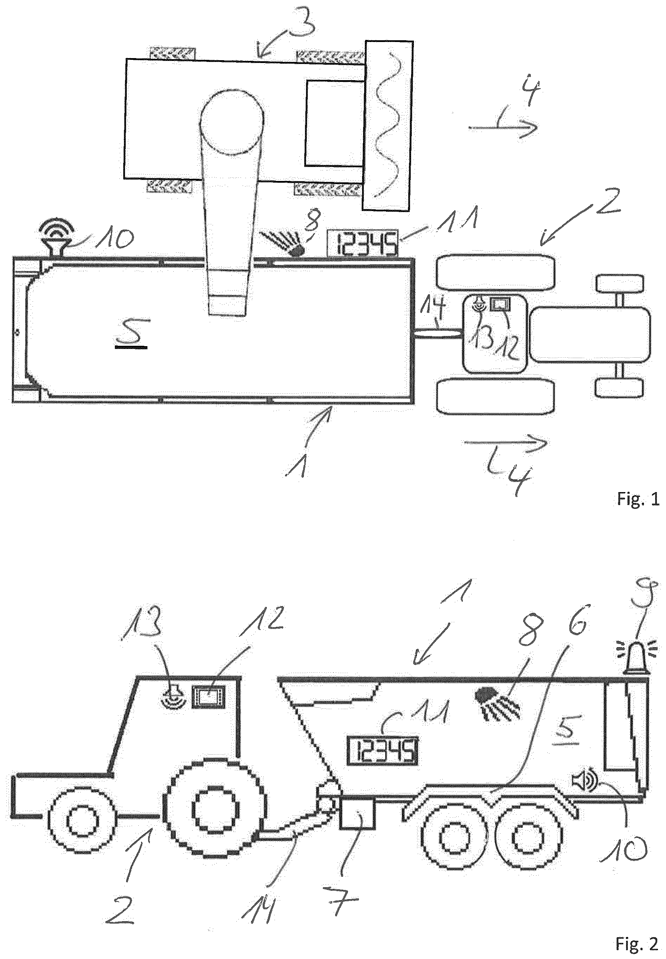

Fig. 1 und 2 zeigen einen landwirtschaftlichen Transportwagen, der von einem Zugfahrzeug 2 gezogen wird. Der Transportwagen 1 ist mit dem Zugfahrzeug 2 über eine Deichsel 14 gekoppelt.

Der Transportwagen 1 verfügt über einen Laderaum 5, der im Ernteeinsatz ausgehend von einem Erntefahrzeug 3 beladen wird. Im Ernteeinsatz wird der Transportwagen 1 vom Zugfahrzeug 2 in der Fahrtrichtung 4 bewegt, wobei parallel hierzu das Erntefahrzeug 3 ebenfalls in Fahrtrichtung 4 bewegt wird. Bei diesem parallelen Fahren von Transportwagen 1 und Erntefahrzeug 3 wird der Laderaum 5 des Transportwagens 1 ausgehend vom Erntefahrzeug 3 beladen.

Aus der Praxis ist es bereits bekannt, während dieses Beladens des Transportwagens 1 ausgehend vom Erntefahrzeug 3 eine Masse des im Laderaum 5 des Transportwagens 1 aufgenommenen Ernteguts automatisch zu ermitteln. Hierzu dient eine dem Transportwagen 1 zugeordnete Masseerfassungseinrichtung 6, mit Hilfe derer automatisch die Masse des im Laderaum 5 des Transportwagens 1 aufgenommenen Ernteguts während des Beladevorgangs des Transportwagens 1, ausgehend vom Erntefahrzeug 3 erfasst werden kann.

Die Erfindung schlägt vor, abhängig von der während des Beladens ermittelten Masse des im Laderaum 5 des Transportwagens 1 aufgenommenen Ernteguts mindestens eine Signaleinrichtung des Transportwagens 1 automatisch anzusteuern, um zumindest einem Fahrer des Erntefahrzeugs 3 sowie ggf. auch einem Fahrer des Zugfahrzeugs 2 bzw. des Transportwagens 1 das Ende des Beladevorgangs automatisch zu signalisieren.

Vorzugsweise ist vorgesehen, dass die ermittelte Masse des im Laderaum 5 aufgenommenen Ernteguts automatisch mit einem von einer maximalen zulässigen Beladung abhängigen Grenzwert verglichen wird. Dann, wenn die ermittelte Masse des im Laderaum 5 aufgenommenen Ernteguts diesen Grenzwert erreicht oder überschreitet, wird die jeweilige Signaleinrichtung angesteuert, um zumindest dem Fahrer des Erntefahrzeugs 3 das Ende des Beladevorgangs zu signalisieren. Abhängig von der ermittelten Masse des im Laderaum 5 aufgenommenen Ernteguts kann auch automatisch eine Gesamtmasse des Transportwagens 1 oder eine Gesamtmasse des Zuggespanns aus Transportwagen 1 einschließlich des Zugfahrzeugs 2 ermittelt und mit einem von einer maximalen zulässigen Gesamtmasse abhängigen Grenzwert verglichen werden. Dann, wenn die ermittelte Gesamtmasse diesen Grenzwert erreicht oder überschreitet, wird wiederum die jeweilige Signaleinrichtung des Transportwagens 1 angesteuert, um zumindest dem Fahrer des Erntefahrzeugs 3 das Ende des Beladevorgangs zu signalisieren.

Der von der maximalen zulässigen Beladung abhängige Grenzwert oder der von der maximalen zulässigen Gesamtmasse abhängige Grenzwert wird derart gewählt, dass zumindest dem Fahrer des Erntefahrzeugs 3 das Ende des Beladevorgangs vor Erreichen der maximal zulässigen Beladung oder vor Erreichen der maximal zulässigen Gesamtmasse signalisiert wird. In diesem Fall steht dann noch ein Puffer bzw. eine Reserve für die zuzuladende Masse des Ernteguts zur Verfügung, um eine aktuell im Feld befahrene Spur noch zu Ende zu ernten und erst im Anschluss den Transportwagen 1 gegen einen neuen, unbeladenen Transportwagen auszutauschen.

Besonders bevorzugt ist vorgesehen, dass die maximal zulässige Beladung oder die maximal zulässige Gesamtmasse vom Fahrer einstellbar ist. Hierdurch kann dann die maximal zulässige Beladung oder die maximal zulässige Gesamtmasse an die aktuell gültigen Randbedingungen angepasst werden. Hierdurch kann zum Beispiel die Anpassung an die in unterschiedlichen Ländern gültige, unterschiedliche maximal zulässige Gesamtmasse für den Straßentransport erfolgen.

Erfolgt der Abtransport nicht über öffentliche Straßen, kann die maximal zulässige Beladung höher eingestellt werden.

Zur Bodenschonung kann die maximal zulässige Beladung geringer eingestellt werden.

Alternativ oder zusätzlich kann vorgesehen werden, die mögliche Zuladung automatisch durch eine Steuerungseinrichtung zu ermitteln. Dazu können die Leergewichte des Zugfahrzeugs 2 und des Transportwagens 1 sowie ggf. auch der Füllstand des Kraftstofftanks des Zugfahrzeugs 2 über ein Datenkommunikationssystem des Zuggespanns abgerufen und mit dem maximal zulässigen Gesamtgewicht verrechnet werden.

Besonders bevorzugt ist vorgesehen, dass eine Signaleinrichtung des Transportwagens 1 angesteuert wird, um zumindest dem Fahrer des Erntefahrzeugs 3 das bevorstehende Ende des Beladevorgangs zu signalisieren. Fig. 1 und 2 zeigen unterschiedliche Signaleinrichtungen des Transportwagens. So kann zum Beispiel eine Arbeitsbeleuchtung 8 des Transportwagens angesteuert werden, um das Ende des Beladevorgangs zu signalisieren. Zusätzlich oder alternativ kann auch eine Rundumleuchte 9 des Transportwagens angesteuert werden, um das Ende des Beladevorgangs anzuzeigen. Ferner kann eine Ladegewichtsanzeige 11 des Transportwagens 1 angesteuert werden, um das Ende des Beladevorgangs zu signalisieren. Alternativ oder zusätzlich ist es auch möglich eine Signalhupe 10 des Transportwagens 1 anzusteuern, um das Ende des Beladevorgangs zu signalisieren.

So kann zum Beispiel vorgesehen sein, die Arbeitsbeleuchtung 8 des Transportwagens kurzzeitig, ggf. mehrfach hintereinander, einzuschalten und auszuschalten, um so im Sinne einer Lichthupe den Fahrer des Erntefahrzeugs 3 auf das Ende des Beladevorgangs hinzuweisen. Dann, wenn die Ladegewichtsanzeige 11 des Transportwagens 1 angesteuert wird, um dem Fahrer des Erntefahrzeugs 3 das Ende des Beladevorgangs zu signalisieren, ist es möglich, die Ladegewichtsanzeige 11 zyklisch einzuschalten und auszuschalten. Auch die akustische Signalhupe 10 kann durch aufeinanderfolgenden zyklisches Einschalten und Ausschalten genutzt werden, um dem Fahrer des Erntefahrzeugs das Ende des Beladevorgangs zu signalisieren. Fig. 1 und 2 zeigen weiterhin eine akustische Signaleinrichtung 13 des Zugfahrzeugs 2, mit Hilfe derer dem Fahrer des Zugfahrers 2 das Ende des Beladevorgangs signalisiert werden kann.

Fig. 2 zeigt eine Steuerungseinrichtung 7 des Transportwagens, die zur Durchführung des erfindungsgemäßen Verfahrens genutzt werden kann. Ferner kann die Steuerungseinrichtung, die zur Durchführung des erfindungsgemäßen Verfahrens dient, im Zugfahrzeug 2 integriert sein. So zeigen Fig. 1 und 2 ein Bedienterminal einer entsprechende Steuerungseinrichtung 12 des Zugfahrzeugs 2.

Dann, wenn es sich beim Transportwagen 1 um einen von einem Zugfahrzeug 2 gezogenen Transportwagen handelt, können Steuerungsfunktionen auch auf die beiden Steuerungseinrichtungen 7 und 12 verteilt sein. So kann dann vorgesehen sein, dass die Steuerungseinrichtung 7 des Transportwagens 1 abhängig von der von der Masseerfassungseinrichtung 6 erfassten Masse des zugeladenen Ernteguts die Ansteuerung mindestens einer Signaleinrichtung des Transportwagens 1 übernimmt. Die Steuerungseinrichtung 12 des Zugfahrzeugs kann genutzt werden, um die maximal zulässige Beladung oder die maximal zulässige Gesamtmasse einzustellen und diesen Wert über eine nicht gezeigte BUS-Verbindung der Steuerungseinrichtung 7 des Transportwagens 1 bereitzustellen.

Die Erfindung kann auch bei selbstfahrenden landwirtschaftlichen Transportwagen 1 zum Einsatz kommen.

Ferner betrifft die Erfindung einen landwirtschaftlichen Transportwagen 1 mit einer Masseerfassungseinrichtung 6, die während des Beladevorgangs des Transportwagens 1 die Masse des im Laderaum 5 des Transportwagens 1 aufgenommenen Ernteguts automatisch erfasst. Ein erfindungsgemäßer landwirtschaftlicher Transportwagen 1 verfügt ferner über mindestens eine Signaleinrichtung und eine Steuerungseinrichtung zur Durchführung des erfindungsgemäßen Verfahrens.

Mit der Erfindung ist es möglich, den Fahrer des Transportwagens 1 bzw. eines Zugfahrzeugs 2 des Transportwagens 1 auf das Erreichen einer maximal zulässigen Beladung bzw. auf das Erreichen eines maximal zulässigen Gesamtgewichts bzw. einer Gesamtmasse hinzuweisen. Ferner ist es möglich, den Fahrer des Erntefahrzeugs 3 hierauf hinzuweisen. Die Fahrer von Transportwagen 1 und Erntefahrzeug 3 müssen demnach nicht zum Beispiel über Sprechfunk kommunizieren.

Das Signalisieren des Endes des Beladevorgangs erfolgt automatisch unter Zugriff auf ohnehin am Transportwagen 1 bzw. Zugfahrzeug 2 verbaute Signaleinrichtungen. Die Signaleinrichtungen 8, 9, 10 und 11 des Transportwagens 1 dienen dabei insbesondere der Signalisierung des Endes des Beladevorgangs für den Fahrer des Erntefahrzeugs 3.

Gemäß einer weiteren Ausführungsform der Erfindung kann es vorgesehen sein, bereits vor dem Erreichen der maximal zulässigen bzw. eingestellten Beladung zu signalisieren, dass der Beladevorgang in Kürze beendet ist. Dazu kann der Beladungszustand, bei welchem die Vorwarnung signalisiert wird, beispielsweise durch eine absolute Masse vorgegeben werden, die noch im Transportwagen 1 aufnehmbar ist, oder es kann z. B. ein prozentualer Wert der maximalen Zuladung eingestellt werden. Sobald dann der entsprechende Beladungszustand erreicht ist, werden die oder nur einzelne Signaleinrichtungen 8, 9, 10, 11 angesteuert, um zu signalisieren, dass der Transportwagen fast vollständig befüllt ist und das Ende der Befüllung kurz bevor steht. Besonders vorteilhaft kann damit einem Fahrer eines weiteren am Abtransport beteiligten Zuggespanns signalisiert werden, dass sein Einsatz kurz bevorsteht. Der Fahrer des weiteren Zuggespanns kann dann abschätzen an welcher Position sein Transportwagen benötigt wird und sein Zuggespann bereits dorthin bewegen.

Zur Unterscheidung der Signalisierung eines fast vollen Transportwagens gegenüber dem Signal zur Beendigung des Beladevorgangs, kann vorgesehen werden, die Signaleinrichtungen 8, 9, 10, 11 nur kurz oder mit einer definierten Sequenz (z.B. 3x kurz) anzusteuern oder es kann vorgesehen werden, lediglich eine vorbestimmte einzelne Signaleinrichtung 8, 9, 10, 11 anzusteuern. Besonders vorteilhaft ist es, zur Signalisierung eines fast vollständig befüllten Transportwagens 1 die Rundumleuchte 9 anzusteuern, da diese auch aus größerer Entfernung von einem Fahrer eines weiteren Zuggespanns gut erkennbar bzw. wahrnehmbar ist.

### Bezugszeichenliste

- 1: Transportwagen
- 2: Zugfahrzeug
- 3: Erntefahrzeug
- 4: Fahrtrichtung
- 5: Laderaum
- 6: Masseerfassungseinrichtung
- 7: Steuerungseinrichtung
- 8: Signaleinrichtung
- 9: Signaleinrichtung
- 10: Signaleinrichtung
- 11: Signaleinrichtung
- 12: Steuerungseinrichtung
- 13: Signaleinrichtung
- 14: Deichsel

## Patentansprüche

1. Verfahren zum Betreiben eines von einem Zugfahrzeug (2) gezogenen oder eines selbstfahrenden landwirtschaftlichen Transportwagens (1), wobei ein Laderaum (5) des Transportwagens (1) von einem neben dem Transportwagen (1) fahrenden Erntefahrzeug (3) aus mit Erntegut beladen wird, **gekennzeichnet dadurch, dass** während des Beladevorgangs des landwirtschaftlichen Transportwagens (1) eine Masse des im Laderaum (5) des Transportwagens (1) aufgenommenen Ernteguts automatisch ermittelt wird, und abhängig von der ermittelten Masse des im Laderaum (5) des Transportwagens (1) aufgenommenen Ernteguts mindestens eine Signaleinrichtung (8, 9, 10, 11, 13) des Transportwagens (1) automatisch angesteuert wird, um zumindest einem Fahrer des Erntefahrzeugs das Ende des Beladevorgangs zu signalisieren, wobei die ermittelte Masse des im Laderaum (5) aufgenommenen Ernteguts automatisch mit einem von einer maximalen zulässigen Beladung abhängigen Grenzwert verglichen wird, und dass dann, wenn die ermittelte Masse des im Laderaum (5) aufgenommenen Ernteguts diesen Grenzwert erreicht oder überschreitet, die jeweilige Signaleinrichtung (8, 9, 10, 11, 13) des Transportwagens (1) angesteuert wird, um zumindest dem Fahrer des Erntefahrzeugs (3) das Ende des Beladevorgangs zu signalisieren.

2. Verfahren nach Anspruch 1, **dadurch gekennzeichnet, dass** abhängig von der ermittelten Masse des im Laderaum (5) aufgenommenen Ernteguts automatisch eine Gesamtmasse des Transportwagens (1) oder eine Gesamtmasse des Transportwagens (1) einschließlich des Zugfahrzeugs (2) ermittelt und mit einem von einer maximalen zulässigen Gesamtmasse abhängigen Grenzwert verglichen wird, und dass dann, wenn die ermittelte Gesamtmasse diesen Grenzwert erreicht oder überschreitet, die jeweilige Signaleinrichtung (8, 9, 10, 11, 13) des Transportwagens (1) angesteuert wird, um zumindest dem Fahrer des Erntefahrzeugs (3) das Ende des Beladevorgangs zu signalisieren.

3. Verfahren nach Anspruch 1, **dadurch gekennzeichnet, dass** der von der maximalen zulässigen Beladung abhängige Grenzwert derart gewählt wird, dass zumindest dem Fahrer des Erntefahrzeugs (3) das Ende des Beladevorgangs vor Erreichen der maximalen zulässigen Beladung oder vor Erreichen der maximalen zulässigen Gesamtmasse signalisiert wird.

4. Verfahren nach Anspruch 2, **dadurch gekennzeichnet, dass** der von der maximalen zulässigen Gesamtmasse abhängige Grenzwert derart gewählt wird, dass zumindest dem Fahrer des Erntefahrzeugs (3) das Ende des Beladevorgangs vor Erreichen der maximalen zulässigen Beladung oder vor Erreichen der maximalen zulässigen Gesamtmasse signalisiert wird.

5. Verfahren nach Anspruch 1 oder 3, **dadurch gekennzeichnet, dass** die maximal zulässige Beladung einstellbar oder durch eine Steuerungseinrichtung automatisch ermittelbar ist.

6. Verfahren nach Anspruch 2 oder 4, **dadurch gekennzeichnet, dass** die maximal zulässige Gesamtmasse einstellbar oder durch eine Steuerungseinrichtung automatisch ermittelbar ist.

7. Verfahren nach einem der Ansprüche 1 bis 6, **dadurch gekennzeichnet, dass** zumindest eine Signaleinrichtung (8, 9, 10, 11) des Transportwagens angesteuert wird, um zumindest dem Fahrer des Erntefahrzeugs (3) das Ende des Beladevorgangs zu signalisieren.

8. Verfahren nach einem der Ansprüche 1 bis 7, **dadurch gekennzeichnet, dass** eine Arbeitsbeleuchtung (8) des Transportwagens und/oder eine Rundumleuchte (9) des Transportwagens und/oder eine Ladegewichtsanzeige (11) des Transportwagens und/oder eine Signalhupe (10) des Transportwagens angesteuert wird, um zumindest dem Fahrer des Erntefahrzeugs (3) das Ende des Beladevorgangs zu signalisieren.

9. Verfahren nach einem der Ansprüche 1 bis 8, **dadurch gekennzeichnet, dass** zusätzlich einem Fahrer des landwirtschaftlichen Transportwagens (1) oder des Zugfahrzeugs (2) des Transportwagens das Ende des Beladevorgangs signalisiert wird.

10. Verfahren nach einem der Ansprüche 1 bis 9, **dadurch gekennzeichnet, dass** vor dem Ende des Beladevorgangs signalisiert wird, dass der Transportwagen (1) fast vollständig befüllt ist, um einem Fahrer eines weiteren am Abtransport beteiligten Zuggespanns zu signalisieren, dass sein Einsatz kurz bevorsteht.

11. Landwirtschaftlicher Transportwagen (1), mit einer Masseerfassungseinrichtung (6), die während des Beladevorgangs des Transportwagens (1) eine Masse des im Laderaum (5) des Transportwagens (1) aufgenommenen Ernteguts automatisch ermittelt, mit mindestens einer Signaleinrichtung (8, 9, 10, 11), und mit einer Steuerungseinrichtung (7) zur Durchführung des Verfahrens nach einem der Ansprüche 1 bis 10, wobei dieselbe abhängig von der während des Beladevorgangs des Transportwagens (1) im Laderaum (5) des Transportwagens aufgenommenen Masse des Ernteguts mindestens eine Signaleinrichtung (8, 9, 10, 11, 13) des Transportwagens (1) automatisch ansteuert, wodurch zumindest einem Fahrer eines Erntefahrzeugs (3), welches den Beladevorgang ausführt, das Ende des Beladevorgangs signalisierbar ist.

## Claims

1. A method of operating an agricultural transport wagon (1) which is towed by a towing vehicle (2) or which is self-propelled, wherein a load space (5) of the transport wagon (1) is loaded with crop material from a harvesting vehicle (2) travelling beside the transport wagon (1), **characterised in that** during the operation of loading the agricultural transport wagon (1) a mass of the crop material received in the load space (5) of the transport wagon (1) is automatically ascertained and in dependence on the ascertained mass of the crop material received in the load space (5) of the transport wagon (1) at least one signal device (8, 9, 10, 11, 13) of the transport wagon (1) is automatically actuated to signal the end of the loading operation at least to a driver of the harvesting vehicle, wherein the ascertained mass of the crop material received in the load space (5) is automatically compared to a limit value dependent on a maximum permissible load and when the ascertained mass of the crop material received in the load space (5) reaches or exceeds that limit value the respective signal device (8, 9, 10, 11, 13) of the transport wagon (1) is actuated to signal the end of the loading operation at least to the driver of the harvesting vehicle (3).

2. A method according to claim 1 **characterised in that** in dependence on the ascertained mass of the crop material received in the load space (5) a total mass of the transport wagon (1) or a total mass of the transport wagon (1) including the towing vehicle (2) is automatically ascertained and compared to a limit value dependent on a maximum permissible total mass and when the ascertained total mass reaches or exceeds said limit value the respective signal device (8, 9, 10, 11, 13) of the transport wagon (1) is actuated to signal the end of the loading operation at least to the driver of the harvesting vehicle (3).

3. A method according to claim 1 **characterised in that** the limit value dependent on the maximum permissible load is so selected that the end of the loading operation is signalled at least to the driver of the harvesting vehicle (3) before the maximum permissible load is reached or before the maximum permissible total mass is reached.

4. A method according to claim 2 **characterised in that** the limit value dependent on the maximum permissible total mass is so selected that the end of the loading operation is signalled at least to the driver of the harvesting vehicle (3) before the maximum admissible load is reached or before the maximum permissible total mass is reached.

5. A method according to claim 1 or claim 3 **characterised in that** the maximum permissible load is adjustable or can be automatically ascertained by a control device.

6. A method according to claim 2 or claim 4 **characterised in that** the maximum permissible total mass is adjustable or can be automatically determined by a control device.

7. A method according to one of claims 1 to 6 **characterised in that** at least one signal device (8, 9, 10, 11) of the transport wagon is actuated to signal the end of the loading operation at least to the driver of the harvesting vehicle (3).

8. A method according to one of claims 1 to 7 **characterised in that** a work lighting arrangement (8) of the transport wagon and/or a rotating beacon (9) of the transport wagon and/or a load weight indicator (11) of the transport wagon and/or a signal horn (10) of the transport wagon is actuated to signal the end of the loading operation at least to the driver of the harvesting vehicle (3).

9. A method according to one of claims 1 to 8 **characterised in that** the end of the loading operation is additionally signalled to a driver of an agricultural transport wagon (1) or the towing vehicle (2) of the transport wagon.

10. A method according to one of claims 1 to 9 **characterised in that** before the end of the loading operation it is signalled that the transport wagon (1) is almost completely filled in order to signal to a driver of a further towing team involved in evacuation transport that the use thereof is imminent.

11. An agricultural transport wagon (1) comprising a mass detection device (6) which during the operation of loading the transport wagon (1) automatically ascertains a mass of the crop material received in the load space (5) of the transport wagon (1), at least one signal device (8, 9, 10, 11) and a control device (7) for carrying out the method according to one of claims 1 to 10, wherein same in dependence on the mass of the crop material received in the load space (5) of the transport wagon (1) during the operation of loading the transport wagon (1) automatically actuates at least one signal device (8, 9, 10, 11, 13) of the transport wagon (1) whereby the end of the loading operation can be signalled at least to a driver of a harvesting vehicle (3) which carries out the loading operation.

## Revendications

1. Procédé pour exploiter un véhicule de transport agricole (1) tracté par un véhicule de traction (2) ou automoteur, un espace de chargement (5) du véhicule de transport (1) étant chargé avec du produit récolté par un véhicule de récolte (3) roulant à côté du véhicule de transport (1), **caractérisé en ce que**, pendant l'opération de chargement du véhicule de transport agricole (1), une masse de produit récolté reçu dans l'espace de chargement (5) du véhicule de transport (1) est déterminée automatiquement et, en fonction de la masse déterminée de produit récolté reçu dans l'espace de chargement (5) du véhicule de transport (1), au moins un équipement de signalisation (8, 9, 10, 11, 13) du véhicule de transport (1) est automatiquement activé afin de signaler au moins à un conducteur du véhicule de récolte la fin de l'opération de chargement, la masse déterminée de produit récolté reçue dans l'espace de chargement (5) étant comparée automatiquement à une valeur limite dépendante d'un chargement maximal admissible, et **en ce que**, si la masse déterminée du produit récolté reçu dans l'espace de chargement (5) atteint ou excède cette valeur limite, l'équipement de signalisation respectif (8, 9, 10, 11, 13) du véhicule de transport (1) est activé afin de signaler à au moins un conducteur du véhicule de récolte (3) la fin de l'opération de chargement.

2. Procédé selon la revendication 1, **caractérisé en ce qu'**en fonction de la masse déterminée de produit récolté reçu dans l'espace de chargement (5), une masse totale du véhicule de transport (1) ou une masse totale du véhicule de transport (1) y compris le véhicule de traction (2) est déterminée et comparée à une valeur limite dépendante d'une masse totale maximale admissible, et **en ce que**, si la masse totale déterminée atteint ou excède cette valeur limite, l'équipement de signalisation respectif (8, 9, 10, 11, 13) du véhicule de transport (1) est activé pour signaler au moins au conducteur du véhicule de récolte (3) la fin de l'opération de chargement.

3. Procédé selon la revendication 1, **caractérisé en ce que** la valeur limite dépendante du chargement maximal admissible est choisie de façon que la fin de l'opération de chargement soit signalée au moins au conducteur du véhicule de récolte (3) avant d'atteindre le chargement maximal admissible ou avant d'atteindre la masse totale maximale admissible.

4. Procédé selon la revendication 2, **caractérisé en ce que** la valeur limite dépendante de la masse totale maximale admissible est choisie de façon que la fin de l'opération de chargement soit signalée au moins au conducteur du véhicule de récolte (3) avant d'atteindre le chargement maximal admissible ou avant d'atteindre la masse totale maximale admissible.

5. Procédé selon la revendication 1 ou 3, **caractérisé en ce que** le chargement maximal admissible est réglable ou déterminable automatiquement par l'intermédiaire d'un équipement de commande.

6. Procédé selon la revendication 2 ou 4, **caractérisé en ce que** la masse totale maximale admissible est réglable ou déterminable automatiquement par l'intermédiaire d'un équipement de commande.

7. Procédé selon une des revendications 1 à 6, **caractérisé en ce qu'**au moins un équipement de signalisation (8, 9, 10, 11) du véhicule de transport est activé pour signaler au moins au conducteur du véhicule de récolte (3) la fin de l'opération de chargement.

8. Procédé selon une des revendications 1 à 7, **caractérisé en ce qu'**un moyen d'éclairage de travail (8) du véhicule de transport et/ou un gyrophare (9) du véhicule de transport et/ou une indication du poids de charge (11) du véhicule de transport et/ou un signal sonore (10) du véhicule de transport est activé afin de signaler au moins au conducteur du véhicule de récolte (3) la fin de l'opération de chargement.

9. Procédé selon une des revendications 1 à 8, **caractérisé en ce que** la fin de l'opération de chargement peut en plus être signalée à un conducteur du véhicule de transport agricole (1) ou du véhicule de traction (2) du véhicule de transport.

10. Procédé selon une des revendications 1 à 9, **caractérisé en ce qu'**avant la fin de l'opération de chargement est signalé le fait que le véhicule de transport (1) est presque entièrement empli afin de signaler à un conducteur d'un autre attelage participant au transport qu'il va devoir intervenir bientôt.

11. Véhicule de transport agricole (1), comprenant un équipement de détection de masse (6) qui, pendant l'opération de chargement du véhicule de transport (1), détermine automatiquement une masse de produit récolté reçue dans l'espace de chargement (5) du véhicule de transport (1), comprenant au moins un équipement de signalisation (8, 9, 10, 11), et comprenant un équipement de commande (7) pour mettre en œuvre le procédé selon une des revendications 1 à 10, celui-ci activant automatiquement au moins un équipement de signalisation (8, 9, 10, 11, 13) du véhicule de transport (1) en fonction de la masse de produit récolté reçue dans l'espace de chargement (5) du véhicule de transport pendant l'opération de chargement du véhicule de transport (1), ce qui permet de signaler la fin de l'opération de chargement au moins à un conducteur d'un véhicule de récolte (3) qui effectue l'opération de chargement.
